# EUROPÄISCHE PATENTSCHRIFT

(11) **EP 3 563 187 B1**
(45) Veröffentlichungstag und Bekanntmachung des Hinweises auf die Patenterteilung: **10.03.2021**
(21) Anmeldenummer: 18724518.8
(22) Anmeldetag: 09.05.2018
(51) Int. Cl.: G08B 13/08, G08B 13/12, G02B 6/44

(54) **INFRASTRUKTUR-ALARMMELDEVORRICHTUNG**
INFRASTRUCTURE ALARM SIGNALLING DEVICE
DISPOSITIF D'ALARME POUR INFRASTRUCTURE

(43) Veröffentlichungstag der Anmeldung: 06.11.2019
(73) Patentinhaber: Wolf, Roland, 70437 Stuttgart (DE)
(72) Erfinder: Wolf, Roland, 70437 Stuttgart (DE)
(74) Vertreter: Jeck, Anton
(86) Internationale Anmeldenummer: PCT/EP2018/061992
(87) Internationale Veröffentlichungsnummer: WO 2019/137633

(56) Entgegenhaltungen:
- EP-A1- 2 533 088
- WO-A2-2004/100095
- DE-A1-102016 114 722
- DE-U1-202016 100 895
- US-B1- 6 980 108

## Beschreibung

Die Erfindung betrifft eine stromlose, faseroptische Alarmmeldevorrichtung mit Nachlaufregelung der Alarmmeldung gemäß dem Oberbegriff des Anspruchs 1.

Bei einer solchen Vorrichtung ist ein in einem Gehäuse liegender Messsignalgeber vorgesehen, welcher zumindest einen Kontaktschalter und einen Dorn zum Biegen eines einbringbaren optischen Messfühlers aufweist, wobei der Messsignalgeber zwischen einer ersten Position und mindesten einer zweiten Position verstellbar ist, und ein Federelement zur Positionierung des Messsignalgebers.

Die EP 2 549 317 A1 beschreibt ein Überwachungssystem für den Schließzustand einer Tür oder eines Deckels eines Glasfaser-Netzverteilers mit einer von dem Glasfaser-Netzverteiler räumlich getrennten zentralen Steuer-, Mess- und Überwachungseinheit, die Mittel zum Aussenden und Empfangen von rücklaufenden Lichtimpulsen und deren Auswertung aufweist, mit einer in dem Glasfaser-Netzverteiler angeordneten Dämpfungseinrichtung und mit einem nicht für die Telekommunikation genutzten Glasfaser-Leiter, der mit der Steuer-, Mess- und Überwachungseinheit und der Dämpfungseinrichtung verbunden ist. Dabei weist die Dämpfungseinrichtung eine Betätigungseinrichtung auf, die den Schließzustand der Tür oder des Deckels erfasst und bei geöffneter Tür/geöffnetem Deckel die Dämpfungseinrichtung in einen Zustand versetzt, in dem die durch den Glasfaser-Leiter rücklaufenden Lichtimpulse gedämpft werden.

Aus der WO 2004/100 095 A2 ist ein Sicherheitssystem mit einem fiberoptischen Sensor bzw. ein Verfahren mit einem entsprechenden Sensor für ein solches System bekannt, bei dem ein Eindringen in eine Vielzahl von gesicherten Orten jeweils mit Hilfe eines fiberoptischen Sensors detektiert wird, wobei der Sensor einen Lichtwellenleiter beinhaltet, der beim Eindringen gebogen wird. Dadurch erhöht sich die Dämpfung innerhalb des Lichtwellenleiters, was von einer entfernt angeordneten Verarbeitungseinheit ausgewertet wird und zu einer sicheren Detektion des Einbruchsorts führt.

Aus der D1 ist eine stromlose, faseroptische Einbruch-Alarmmeldevorrichtung zur schnellen und eindeutigen Ortung von unbefugtem Zutritt in Telekommunikationsnetzen Anlagen offenbart.

Weiterhin gibt es unzählige Patente für faseroptische Alarmsensoren, wie Lichtschrankensysteme, Magnetsysteme, LWL (Lichtwellenleiter)-Sender- und Empfängersysteme etc., die nicht über bestehende Multimoden- oder Einmodenfaser-Telekommunikationsnetzverbindungen mit einer am Anfang oder am Ende angeordneten RTU (Remote Test Unit)-Dämpfungsmesseinrichtung bzw. einem RTFS (Remote Fiber Test System )-Glasfaserüberwachungssystem verbunden sind. Diese Alarmsensoren sind unter Betriebsbedingungen und insbesondere unter Einfluss von Temperaturwechsel, Luftfeuchte oder häufigen Schaltzyklen sehr störanfällig und unzuverlässig.

Die Aufgabe der Erfindung besteht darin, die gattungsgemäße Alarmmeldevorrichtung so weiterzubilden, dass sie eine zuverlässige Nachlaufregelung an einer Vielzahl von Infrastrukturen ermöglicht.

Erfindungsgemäß wird die Aufgabe dadurch gelöst, dass in dem Gehäuse eine Führungspartie mit einem Führungsbereich ausgebildet ist, in dem der aufnehmbare optische Messfühler in einen aktivierten Zustand biegbar ist, und dass innerhalb des Führungsbereichs ein Aufnahmeraum für den optischen Messsignalgeber ausgebildet ist, in welchem der aufgenommene aktivierte optische Messfühler unabhängig von der Position des Messsignalgebers aktiviert aufnehmbar ist.

Infrastrukturen nach der vorliegenden Erfindung können insbesondere Straßenverteiler, Schächte, Gebäude oder Muffen sein. Insbesondere kann die Alarmmeldevorrichtung bei Infrastruktureinrichtungen wie Straßenverteilern, Schächten oder Gebäuden vorgesehen werden. Üblicherweise werden Lichtwellenleiter durch einen Mechanismus gebogen, wodurch ein entsprechendes Signal an einer RTU oder einem RTFS abgegriffen werden kann. Der Mechanismus wird üblicherweise durch das Öffnen einer Tür oder einer ähnlichen Öffnung betätigt, wodurch ein Umbiegen des Lichtwellenleiters bewirkt wird. Sobald die Tür oder die sonstige Öffnung geschlossen wird, wird der Mechanismus in seine Ursprungsposition zurückgestellt, wodurch eine Entspannung beziehungsweise ein Aufbiegen oder Glätten des Lichtwellenleiters verursacht wird. Sobald die optisch aktive Biegung des Lichtwellenleiters (optischen Messfühler) aufgehoben ist, kann kein Signal mehr durch die RTU, ein RTFS oder eine vergleichbare Einrichtung detektiert werden.

Eine Nachlaufregelung stellt erfindungsgemäß die Möglichkeit dar, über das Öffnen und das anschließende Schließen einer Tür hinaus ein detektierbares Signal eines Lichtwellenleiters bereitzustellen, welcher den Öffnungsvorgang anzeigen soll. Der Fachmann weiß, dass erfindungsgemäß nicht jede Schleife eines Lichtwellenleiters als Aktivierung des selbigen zu verstehen ist. Insbesondere durch eine starke lokale Verbiegung des Lichtwellenleiters kann ein Signal nach oben beschriebener Methode detektiert werden. So kann grundsätzlich der optische Messfühler in einer von der geraden abweichenden Ausrichtung vorgesehen sein, ohne dass ein detektierbares Signal durch den optischen Messfühler erzeugt wird. Hingegen kann eine lokale Krümmung innerhalb einer Schleife ein Signal, wie es erfindungsgemäß als aktivierter optischer Messfühler bezeichnet wird, erzeugen. Diese lokale Krümmung kann erfindungsgemäß mittels des Dorns bereitgestellt werden.

Nach einem Grundgedanken der vorliegenden Erfindung wird eine Nachlaufregelung dadurch bereitgestellt, dass ein anfangs nicht-aktivierter Lichtwellenleiter/optischer Messfühler durch einen entsprechenden Mechanismus in der erfindungsgemäßen Alarmmeldevorrichtung beim Öffnen einer Tür oder einer anderen Öffnung zwar aktiviert wird, jedoch beim Verschließen die Aktivierung des Lichtwellenleiters aufrechterhalten wird. Das Öffnen der Tür oder einer anderen Öffnung steht damit insoweit in bevorzugtem Zusammenhang mit der vorliegenden Erfindung, als dass der Mechanismus, insbesondere der Messsignalgeber, vorzugsweise mit der Tür oder der anderen Öffnung kontaktiert und somit eine Interaktion zwischen Tür und Mechanismus beim Öffnen stattfindet. Grundsätzlich kann der Mechanismus durch eine beliebige Betätigung, also eine erfindungsgemäße Manipulation der Messsignalgeberposition, in seinem Gehäuse bewirkt werden.

Der Messsignalgeber kann erfindungsgemäß einteilig oder mehrteilig, insbesondere zweiteilig, aufgebaut sein. Erfindungsgemäß kann der Messsignalgeber in einem in das Gehäuse zurückgedrückten Zustand unter Federspannung stehen. Diese kann in gespanntem Zustand einen Spannungszug oder einen Spannungsdruck aufweisen.

Der Kontaktschalter des Messsignalgebers ist vorzugsweise bereitgestellt, mit einer Tür, einem Deckel oder einem sonstigen Verschluss für eine Öffnung im geschlossenen Zustand der selbigen zu kontaktieren. Der Kontaktschalter kann demnach ein Kontaktbereich des Messsignalgebers mit einem Fremdkörper, insbesondere einer Tür, eines Verschlusses oder einer Muffe, sein. Wird ein solcher Verschluss entfernt oder geöffnet, ist ein Raum außerhalb des Gehäuses des Alarmmeldesensors/der Vorrichtung bereitgestellt, in welchen sich der Kontaktschalter durch zumindest teilweise Entspannung der Feder hinein bewegen kann.

Die Last des Verschlusses oder eines anderen Widerstands/Fremdkörpers voranstehend genannter Art gegen den Kontaktschalter des federgespannten Messsignalgeber beziehungsweise den Messsignalgeber insgesamt kann in einem solchen Zustand demnach so reduziert oder entfernt sein, dass die Feder den Kontaktschalter beziehungsweise den Messsignalgeber in seiner Position verändern kann. Eine erste Position kann insbesondere eine in das Gehäuse zurückgezogene Position des Kontaktschalters/Messsignalgebers sein. Eine zumindest zweite Position des Kontaktschalters beziehungsweise des Messsignalgebers liegt gegenüber dem Gehäuse der Alarmmeldevorrichtung weiter außerhalb des Gehäuses als die erste Position des Kontaktschalters beziehungsweise des Messsignalgebers. Bei den einzelnen Positionen des Messsignalgebers kann es sich demnach um relative Positionen des Messsignalgebers gegenüber dem Gehäuse handeln, wobei ein Heben oder ein Senken des Messsignalgebers einen Übergang zwischen den Positionen bewirken kann. Vorzugsweise handelt es sich bei dem Übergang zwischen den Positionen um eine Hubbewegung des Messsignalgebers relativ zu dem Gehäuse weiter aus dem Gehäuse heraus oder in das selbige hinein. Durch entsprechenden Druck auf den Kontaktschalter kann dieser aus der zweiten in seine erste Position verlagert/verschoben werden.

Der Dorn kann mit dem Kontaktschalter beispielsweise wirkverbunden oder einstückig ausgebildet sein. Hierbei kann zwischen Dorn und den weiteren Bestandteilen des Messsignalgebers, insbesondere dem Kontaktschalter, ein Freiraum gebildet sein, welcher verhindert, dass ein eingelegter optischer Messfühler, welcher durch dornvermittelte Verformung aktiviert wurde, beim Zurückdrücken des Kontaktschalters beziehungsweise des Messsignalgebers in seine erste Position wieder in seine Ausgangsposition beziehungsweise Ausgangsform zurückgeführt wird. Dieser Freiraum kann auch durch Bereitstellen des Dorns als Stufe oder Vorsprung gebildet sein. Der erfindungsgemäße Freiraum ist zumindest dann verwirklicht, wenn durch Zurückdrücken des Messsignalgebers in seine erste zurückgezogene Position die zuvor erzeugte Aktivierung des optischen Messfühlers unverändert bleibt, also insbesondere nicht zurückgedrückt wird.

Es ist vorgesehen, dass ein aktivierter optischer Messfühler in der Alarmmeldevorrichtung nach Aktivierung durch weitere Betätigung des Messsignalgebers mit Bezug zu seiner Nachlaufregelung nicht beeinflussbar ist, also nicht deaktiviert beziehungsweise zurückgedrückt wird.

Erfindungsgemäß kann der Dorn jede Form aufweisen, die geeignet ist, einen Lichtwellenleiter, insbesondere einen optischen Messfühler, so zu verformen, dass die entstehende lokale Verformung eine messbare Veränderung zum Beispiel in der Intensität des geleiteten Lichts oder eine sonstige mittels RFTS oder RTU detektierbare Änderung hervorruft. Besonders bevorzugt weist der Dorn gegenüber dem Lichtwellenleiter eine abgerundete Form auf, wodurch einer Verletzung des optischen Messfühlers vorgebeugt sein kann.

Bevorzugte Ausführungsformen sind in den abhängigen Ansprüchen angegeben.

Man erkennt, dass die Erfindung vorzugsweise dann verwirklicht ist, wenn es sich um eine stromlose, faseroptische Alarmmeldevorrichtung zur schnellen und eindeutigen Ortung des unbefugten Öffnens von Infrastrukturanlagen, insbesondere von rechteckigen oder zylinderförmigen Muffen in Telekommunikationsnetzanlagen, Straßenverteilern, Schächten oder Gebäuden mit Nachlaufregelung, handelt oder anderen verschließbaren Öffnungen. Dabei kann in einer Lichtwellenleiter-Muffe (= LWL-Muffe) oder einer sonstigen Einrichtung mit verschließbarer Öffnung ein faseroptischer Alarmsensor zusätzlich zu einem bereits vorhandenen faseroptischen Medienmeldesystem oder Muffenlecksensor installiert sein. Die Einrichtung kann über das bestehende Glasfaser-Orts- und Fernmeldenetz, mit einer am Anfang oder am Ende angeordneten RTU (= Remote Test Unit)-Dämpfungsmesseinrichtung oder einem RFTS (= Remote Fiber Test System)-Glasfaserüberwachungssystem verbunden sein. In den Alarmsensor ist ein optischer Messfühler einer zwischengespleißten Glasfaser einer innenliegenden Multimode- oder Einmodenfaser eingelegt, und zwar zwischen einer zwischengespleißten Glasfaser einer innenliegenden Multimode- oder Einmodenfaser. Der faseroptische Alarmsensor kann folgende Bestandteile aufweisen:
a) ein Unter- und Oberteil,
b) Glasfaser-Führungselemente,
c) einen innenliegenden Messsignalgeber mit einem Kontaktschalter,
d) einen Dorn mit einem Durchmesser ≥ 4 mm vorzugsweise ≥ 8 mm und/oder
e) eine Feder,
f) eine Nachlaufregelung mit Deaktivierungsmechanismus und/oder
g) einen flexiblen Bowdenzug und/oder einen Kugel-Druck-Signalüberträger.

Als Alarmsensor können im Inneren einer LWL-Abzweig-, Durchgangs- oder Verbindungsmuffe ein wiederverwendbarer faseroptischer Sensor, bestehend aus einem Messsignalmessgeber mit vorzugsweise 8 mm Durchmesser und 10 mm Hubweg im aktivierten Zustand, sowie eine Glasfaser montiert sein, die zur Alarmmeldung bei unerlaubter Öffnung vorgesehen sein können. Als Sensormessfühler kann eine Multimoden- oder Einmodenglasfaser eingesetzt sein, die mit oder ohne einem zwischengespleißten Muffen-Lecksensor oder einem faseroptischen Medienmeldesystem die Überwachungs- und Alarmfunktion übernimmt.

Der Messsignalgeber gemäß der Erfindung kann zur Erkennung des Öffnens von Muffen und anderen Einrichtungen einen Kontaktschalter aufweisen, der beim Öffnen durch Ausdehnung der unter Spannung befindlichen Feder, insbesondere einer Druck- oder Bandfeder, ausgelöst wird. Diese gibt im Fall des Öffnens sofort und zuverlässig ein eindeutig identifizierbares Signal ab, das durch einen durch die Biegung des Glasfaserabschnitts erzeugten Dämpfungsanstieg im Bereich von vorzugsweise 850, 1300, 1310, 1550, 1625 oder 1650 nm so hoch ist, dass er mittels einer vollautomatischen RTU-Dämpfungsmesseinrichtung oder eines RTFS-Glasfaserüberwachungssystems (Monitoringsystem) über Entfernungen bis 80 km feststellbar ist.

Insbesondere im Bereich von Glasfaser-Telekommunikations-, Energie-, Wasser-, Gasversorgungs- oder Sicherheitsanlagen kann der Alarmsensor nachträglich in bestehende Anlagen integriert werden. Es genügt dabei, das Duplex-Multimoden- oder Einmodenfaserkabel des vorkonfektionierten Alarmsensors beispielsweise in der LWL-Verbindungsmuffe bis zur Spleißkassette zu verlegen und zwischen die Überwachungsfasern des Glasfaserkabels (Hauptkabels) des Orts- und Fernnetzes, des Muffen-Lecksensors und/oder des faseroptischen Medienmeldesystems zu spleißen. Es handelt sich demnach vorzugsweise um ein nachrüstbares System, welches an bereits installierte Lichtwellenleiter angeschlossen werden kann.

Vorzugsweise ist es vorgesehen, dass der Messsignalgeber in dem Aufnahmeraum vorgesehen ist. Die Führungspartie kann hierbei vorgesehen sein, den Messsignalgeber zwischen einer ersten und einer zweiten Position zu führen.

Besonders bevorzugt ist es vorgesehen, dass der Messsignalgeber einen Freiraum aufweist, welcher sich ausgehend vom Dorn in Richtung kontaktschalterseitiges Ende des Messsignalgebers erstreckt. Der Freiraum kann insbesondere innerhalb des Aufnahmeraums angeordnet sein.

Nach einer Weiterbildung der Erfindung ist es vorgesehen, dass das Gehäuse vorzugsweise entlang des eingelegten optischen Messfühlers teilbar ist. Innerhalb des Gehäuses können der innenliegende Messsignalgeber mit Kontaktschalter und Dorn und das Federelement vorgesehen sein. Vorzugsweise weist das Gehäuse einen Eingang und einen Ausgang für den optischen Messfühler auf, durch welchen der optische Messfühler in das Gehäuse eintritt und aus diesem auch wieder heraustritt.

Die erfindungsgemäße Vorrichtung kann grundsätzlich zwar endseitig an einem optischen Messfühler vorgesehen sein, die bevorzugte Anordnung ist jedoch innerhalb entlang eines Lichtwellenleiters (optischer Messfühler). Durch den teilbaren Aufbau des Gehäuses kann die erfindungsgemäße Alarmmeldevorrichtung mit Nachlaufregelung auch nachträglich an einem bereits verlegten Lichtwellenleiter vorgesehen werden. Hierdurch kann in besonders einfacher Weise ein Nachrüsten der Alarmmeldevorrichtung erfolgen.

Besonders zweckmäßig ist es nach einer Weiterbildung der Erfindung, dass der optische Messfühler innerhalb des Gehäuses mit einer Überlänge bereitgestellt ist und vorzugsweise gegenüber dem Gehäuse festgelegt ist. Durch die Überlänge kann eine besonders stressarme Verformung/ein Umbiegen des optischen Messfühlers im Gehäuse erfolgen, wobei sie in der Alarmmeldevorrichtung ortsfest vorgesehen werden kann. Dies kann beispielsweise durch eine Fixierung des optischen Messfühlers im Bereich des Eingangs und des Ausgangs für den optischen Messfühler am Gehäuse der Alarmmeldevorrichtung erfolgen. Die Festlegung des optischen Messfühlers gegenüber dem Gehäuse kann beispielsweise durch Verkleben, Verschleißen oder in sonstiger Weise erfolgen.

Erfindungsgemäß ist mit Überlänge des optischen Messfühlers eine zusätzliche Länge des selbigen im Gehäuse zu verstehen, welche zumindest länger ist als die benötigte Länge an Lichtwellenleiter im nicht-aktivierten Zustand, also ohne zusätzliche Biegung, wodurch eine besonders stressarme Bewegung des optischen Messfühlers bei seiner Aktivierung in der Alarmmeldevorrichtung bewirkt werden kann. Eine Veränderung der Position des Messfühlers durch den Dorn kann hierdurch dehnungsarm erfolgen, insbesondere in Längsrichtung des optischen Messfühlers.

Besonders bevorzugt ist es nach einer Weiterbildung der Erfindung, dass entlang des optischen Messfühlers in dem Gehäuse mindestens ein exzentrisch gelagertes Element und/oder ein Stempel angeordnet ist, welches/welcher dem aktivierten optischen Messfühler zustellbar ist, und mittels welchem zumindest ein Teil der Überlänge des optischen Messfühlers in dem Gehäuse aus dem Aufnahmeraum heraus verlagerbar ist. Um eine Deaktivierung des aktivierten optischen Messfühlers beispielsweise durch einen Techniker zu bewirken, ist es erforderlich, den Teil des optischen Messfühlers, welcher in dem Aufnahmeraum in verbogener Form, also aktiviert, vorliegt, wieder zu glätten beziehungsweise in einen Zustand geringerer Verbiegung zu überführen. Hierzu sind erfindungsgemäß innerhalb des Gehäuses Elemente vorgesehen, welche seitlich zu dem Messsignalgeber angeordnet sein können und dem optischen Messfühler zustellbar sind. Durch Zustellung dieser Elemente, beispielsweise eines Exzenters oder eines Stempels, kann zumindest ein Teil des aktivierten, also gebogenen optischen Messfühlers, aus dem Bereich des Messsignalgebers beziehungsweise des Aufnahmeraums herausgezogen werden, so dass nur ein Teil des optischen Messfühlers, der geringfügig gebogen vorzugsweise gerade ausgerichtet ist, dort verbleibt. Hierdurch kann mit einfachsten Mitteln ein aktivierter Lichtwellenleiter deaktiviert und für eine erneute Aktivierung durch Verlagerung des Kontaktschalters, beispielsweise beim Öffnen einer Tür, welche mit dem Kontaktschalter kontaktiert, vorbereitet werden. Grundsätzlich kann der Exzenter oder der Stempel dem Lichtwellenleiter an einer beliebigen Stelle, insbesondere außerhalb des Aufnahmeraums, zugestellt werden.

Erfindungsgemäß kann ein Exzenter eine beliebige dem optischen Messfühler durch Drehung zustellbare Einrichtung sein. Ferner kann ein Stempel jedes dem optischen Messfühler durch eine Hub- oder Schwenkbewegung zustellbares Element sein.

Vorzugsweise ist der Messsignalgeber, jedoch zumindest der Dorn, innerhalb des Aufnahmeraums angeordnet. In einem solchen Fall kann es erforderlich sein, dass der Messsignalgeber einen Freiraum, also eine Aussparung, eine Kante, eine Stufe oder ähnliche strukturelle Merkmale, aufweist, welcher vorzugsweise im Bereich des Aufnahmeraums vorgesehen ist. Dieser Freiraum kann insbesondere zwischen Dorn und Kontaktschalter vorgesehen sein. Der Freiraum oder Ähnliches kann hierbei so ausgebildet sein, dass der optische Messfühler zwar durch den Dorn verbogen also aktiviert werden kann, jedoch bei Zurückstellung des Messsignalgebers die Aktivierung aufrechterhalten bleibt. Der Messsignalgeber kann demnach ausgehend von dem Dorn in Richtung Kontaktschalter mit dem Freiraum ausgebildet sein, wobei die Dimensionierung des Freiraums mit einem Hubweg des Messsignalgebers so korreliert, dass ein bereits gebogener optischer Messfühler (aktivierter Messfühler) durch ein Hineindrücken des Messsignalgebers in das Gehäuse nicht aus seiner dornvermittelten Biegung herausgeführt wird. Der Freiraum oder Ähnliches kann somit innerhalb des Aufnahmeraums in dem Führungsbereich vorgesehen sein.

Grundsätzlich ist es denkbar, Führungsbereich, Aufnahmeraum, Freiraum und/oder Dorn räumlich von der Positionierung des Kontaktschalters zu trennen. Die Erfindung ist zumindest auch dann verwirklicht, wenn Aufnahmeraum, Führungsbereich und Dorn mit Bezug zur Hubrichtung des Messsignalgebers seitlich zu dem Kontaktschalter versetzt angeordnet sind. Hierbei können Kontaktschalter und Dorn beispielsweise über ein Brückenelement miteinander wirkverbunden sein. Grundsätzlich können mehrere Aufnahmeräume mit jeweils mindestens einem Dorn vorgesehen sein.

Vorzugsweise ist es vorgesehen, dass der Kontaktschalter mit einem länglichen Kontaktelement, insbesondere einen Bowdenzug-Signalüberträger/Kugel-Druck-Signalübeträger, lösbar verbunden ist, welches ausgebildet ist, einen Abstand zwischen dem Kontaktschalter (bzw. alternativ Schwimmerstempel) und einer Tür oder einem sonstigen Verschluss für eine Öffnung zu überbrücken.

Nach einer Weiterbildung der Erfindung ist es vorgesehen, dass ein Sicherungselement vorgesehen ist, welches in den Messsignalgeber in seiner 1. Position eingreift, wobei das Sicherungselement ausgebildet ist, den Messsignalgeber in seiner ersten Position festzulegen.

Vorzugsweise betrifft die vorliegende Erfindung eine stromlose, faseroptische (Muffen-)Alarmmeldevorrichtung zur Ortung des unbefugten Öffnens von Muffen in Telekommunikationsnetzanlagen mit Alarmmeldung oder anderen verschließbaren Öffnungen, wobei in einer Lichtwellenleiter-Muffe (= LWL-Muffe) ein faseroptischer (Muffen-)Alarmsensor zusätzlich zu einem bereits vorhandenen faseroptischen Medienmeldesystem oder Muffenlecksensor installiert und über das bestehende Glasfaser-Orts- und Fernmeldenetz mit einer am Anfang oder am Ende angeordneten RTU (= Remote Test Unit)-Dämpfungsmesseinrichtung oder einem RFTS (= Remote Fiber Test System)-Glasfaserüberwachungssystem verbunden ist, wobei in den (Muffen-)Alarmsensor ein optischer Messfühler eingelegt ist und wobei der faseroptische (Muffen-)Alarmsensor ein Unter- und Oberteil, Glasfaser-Führungselemente und einen innenliegenden Messsignalgeber mit einem Kontaktschalter, einem Dorn und einer Feder aufweist.

Vorzugsweise ist es vorgesehen, dass die Feder eine metallene Blattfeder, Druckfeder oder eine glasfaserverstärkte Thermoplastfeder ist.

Zweckmäßig ist es vorgesehen, dass der (Muffen-)Alarmsensor mit einem im Sensor angeordneten Arretierungsbolzen in einen Lager-, Transport- und Montagezustand bringbar ist und zur Befestigung beispielsweise am Muffen-Unterteil mit einer Kontaktausbildung zum Muffen-Oberteil ausgebildet ist.

Bevorzugt ist es vorgesehen, dass der (Muffen-)Alarmsensor nachträglich in Reihe geschaltet mit einem Muffen-Lecksensor oder faseroptischem Medienmeldesystem verbunden ist und in bestehenden Multimoden- oder Einmoden-Glasfasernetzverbindungen angeordnet ist.

Zweckmäßigerweise ist es vorgesehen, dass zur Erkennung von Spaltöffnungen (Hubwegen) > 5 mm und <10 mm der optische Messfühler durch den Kontaktschalter über den Dorn verbogen ist, wobei die Verbiegung durch die Feder begrenzt ist, um die auftretende Dämpfungserhöhung in einem Erkennungsbereich > 2,5 mm durch die am Kabelanfang oder -ende angeordnete RTU-Dämpfungsmesseinrichtung oder das RFTS-Glasfaserüberwachungssystem zu messen.

Bevorzugt ist es vorgesehen, dass der (Muffen-)Alarmsensor mit einem Messsignalgeber und dem optischen Messfühler (3) unter Betriebsbedingungen mindestens hundertmal eine gleichbleibende Dämpfungserhöhung erzeugt.

Zweckdienlicherweise ist es vorgesehen, dass das Muffen-Oberteil, insbesondere der Kotaktschalter, mit einem Kontaktgeber ausgebildet ist.

Nach einer Weiterbildung der Erfindung ist es vorgesehen, dass der Stempel federgelagert ist, wobei der Stempel beim Hineindrücken oder beim Herausziehen des Stempels in das beziehungsweise aus dem Gehäuse unter Federspannung steht.

Eine zweckmäßige Weiterbildung der Erfindung besteht darin, dass dem Stempel ein Gegenstück zugeordnet ist, wobei der Messfühler bereichsweise zwischen Stempel und Gegenstück fixierbar ist.

Vorteilhaft ist es vorgesehen, dass unterhalb oder oberhalb des Messsignalgebers ein Signalüberträger vorgesehen ist, welcher ausgebildet ist auf den Messsignalgeber verlagernd einzuwirken.

Die Erfindung wird anhand von Ausführungsbeispielen näher erläutert. Es zeigen:
- Fig. 1: eine Querschnittsseitenansicht der erfindungsgemäßen Alarmmeldevorrichtung mit Messsignalgeber, vorzugsweise zur Aufnahme eines flexiblen Bowdenzugs, in seiner ersten Position und nicht-aktiviertem optischen Messfühler,
- Fig. 2: eine Querschnittsseitenansicht der erfindungsgemäßen Alarmmeldevorrichtung mit Messsignalgeber in seiner zweiten Position und aktiviertem optischen Messfühler,
- Fig. 3: eine Querschnittsseitenansicht der erfindungsgemäßen Alarmmeldevorrichtung mit Messsignalgeber in seiner ersten Position und aktiviertem optischen Messfühler,
- Fig. 4: eine Querschnittsseitenansicht der erfindungsgemäßen Alarmmeldevorrichtung mit Messsignalgeber in seiner ersten Position und Deaktivierung des optischen Messfühlers durch zugestellte Exzenter,
- Fig. 5: eine perspektivische Ansicht eines erfindungsgemäßen Messsignalgebers,
- Fig. 6: eine Querschnittsansicht einer erfindungsgemäßen Alarmmeldevorrichtung mit zweitem Stempel vor einer Deaktivierung des Sensors,
- Fig. 7: eine Querschnittsansicht einer erfindungsgemäßen Alarmmeldevorrichtung mit zweitem Stempel nach einer Deaktivierung des Sensors,
- Fig. 8: eine Querschnittsansicht einer erfindungsgemäßen Alarmmeldevorrichtung mit zweitem Stempel und
- Fig. 9: einen flexiblen Kugel-Druck-Signalüberträger für einen Signalgeber mit Schwimmerstempel.

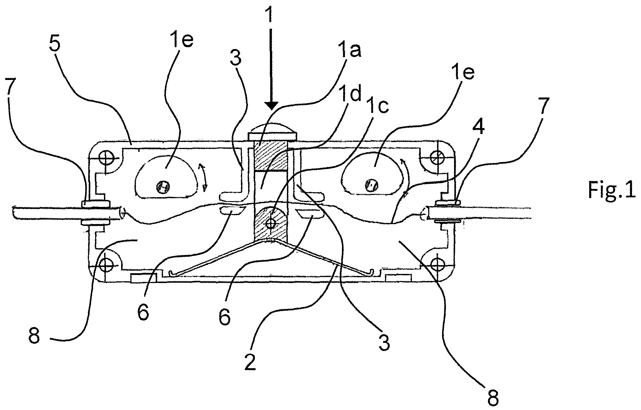

In den Fig. 1 bis 8 ist ein geöffneter vorkonfektionierter, faseroptischer Alarmsensor beispielsweise für rechteckige Durchgangs- oder Verbindungsmuffen zur Aufnahme, insbesondere mit flexiblem Bowdenzug-Signalüberträger, in einem Signalmessgeber 1a, eine innenliegende geschnittene Multimoden- oder Einmodenfaser als optischer Messfühler 4 dargestellt. Der Alarmsensor, insbesondere für rechteckige Durchgangs- oder Verbindungsmuffen, kann aus einem Thermoplast gebildet sein. Der Alarmsensor weist ein Gehäuse 5 auf, durch welches ein optischer Messfühler 4 hindurchgeführt ist. Das Gehäuse 5 ist vorzugsweise entlang der Ausbreitungsrichtung des optischen Messfühlers 4 zweiteilig aufgebaut, wodurch der optische Messfühler (Lichtwellenleiter) nachträglich in das Gehäuse 5 einlegbar ist.

In dem Gehäuse 5 ist ein Messsignalgeber 1 angeordnet, welcher einen Kontaktschalter 1a, vorzugsweise mit einer Öffnung 1i zur Aufnahme beispielsweise eines Bowdenzugs, einen Dorn 1c und/oder einen zwischen dem Dorn 1c und dem Kontaktschalter 1a befindlichen Freiraum 1d aufweisen kann. Seitlich zu dem Messsignalgeber können Glasfaser-Führungselemente 6 angeordnet sein, welche den optischen Messfühler 4 gegenüber dem Messsignalgeber ausrichten. Vorzugsweise sind die Glasfaser-Führungselemente 6 zu dem Messsignalgeber abgerundet ausgebildet, wodurch ein besonders schonendes Umbiegen des Lichtwellenleiters 4 ermöglicht ist. Aufgrund der vorzugsweise horizontal definierten Anordnung der Glasfaser-Führungselemente 6 gegenüber dem Messsignalgeber kann in Bezug zur maximalen Hubhöhe des Messsignalgebers eine definierte Verbiegung des optischen Messfühlers 4 erreicht werden.

Figur 1 zeigt den Messsignalgeber in seiner ersten Position, in welcher dieser in das Gehäuse 5 zurückgezogen angeordnet ist. Dies ist beispielsweise dann der Fall, wenn eine Tür oder ein anderer Verschluss für eine Öffnung mit dem Kontaktschalter 1a in Berührung steht und den Messsignalgeber entgegen der Federspannung der Feder 2 in das Gehäuse drückt. In diesem Zustand verläuft der optische Messfühler 4 in etwa geradlinig zwischen den Glasfaser-Führungselementen 6 beziehungsweise durch einen Freiraum 1d und/oder Aufnahmeraum 1f.

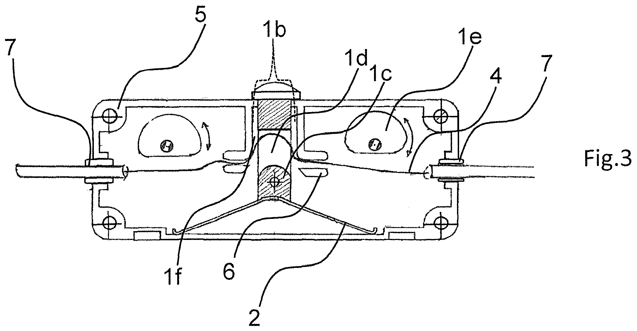

Seitlich zu dem Messsignalgeber kann zumindest eine Führungspartie 3 angeordnet sein. Gemäß Figur 1 weist die Führungspartie 3 zumindest zwei Elemente auf, zwischen welchen der Messsignalgeber angeordnet ist. Die Führungspartie 3 kann zum geführten Hub des Messsignalgebers und/oder auch zur Unterstützung der Biegung des optischen Messfühlers 4 bereitgestellt sein (siehe Figur 3), wobei sich der aktivierte Lichtwellenleiter seitlich an den Elementen der Führungspartie 3 abstützen kann.

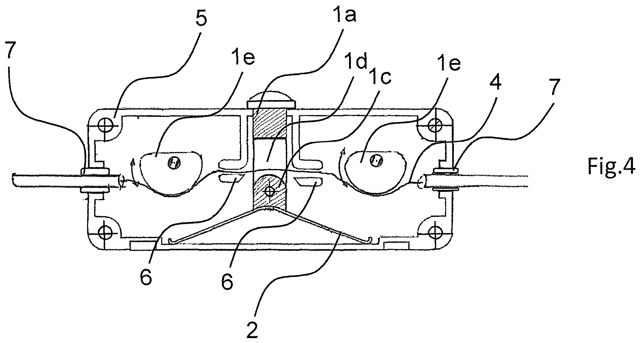

Seitlich zu dem Messsignalgeber ist mindestens ein Exzenter 1e angeordnet, welcher entlang des optischen Messfühlers 4 vorgesehen ist. Dieser ist durch eine Drehung um seine Achse dem Lichtwellenleiter zustellbar. Die Drehung kann von außen beispielsweise durch das Drehen eines aus dem Gehäuse 5 herausragenden oder von außen zugänglichen Elements oder durch das Einführen eines Schlüssels oder Werkzeugs in eine entsprechende Öffnung, mit welcher der Exzenter 1e jeweils wirkverbunden ist, bewirkt werden. Die Drehachse beziehungsweise das Verbindungselement des Exzenters 1e für einen manipulierbaren Eingriff von außen ist in Figur 1 jeweils als kleiner Kreis innerhalb des Exzenters 1e dargestellt. Durch das Drehen des Exzenters wird ein Bereich des Exzenters 1e, welcher einen radial größeren Abstand zu der Drehachse des Exzenters 1e aufweist, dem optischen Messfühler 4 zugestellt. Dies geht besonders deutlich aus Figur 4 hervor.

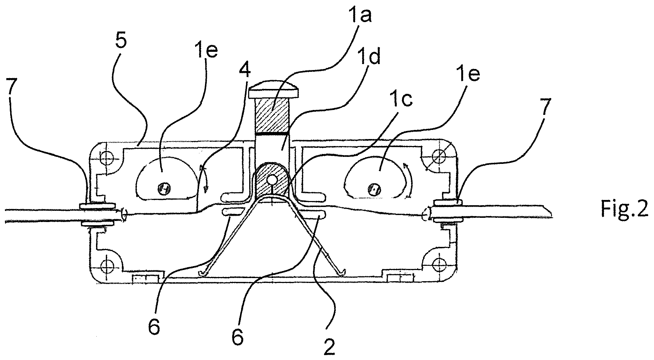

Figur 2 zeigt den Messsignalgeber in einer zweiten Position, in welcher der Messsignalgeber maximal aus dem Gehäuse ausgefahren ist. Die Hubhöhe kann beispielsweise durch entsprechendes Einstellen der Feder 2 definiert werden.

Durch das Ausfahren des Messsignalgebers wird auch der Dorn 1c aus einer unteren Position (Figur 1) in eine erhöhte Position (Figur 2) verlagert. Die Verlagerung ist vorzugsweise mit einer Hubbewegung definierter Höhe verbunden. Durch diese Verlagerung kann der optische Messfühler 4 im Bereich des Dorns 1c umgebogen werden. Die aus dem Umbiegen des optischen Messfühlers 4 im Bereich des Dorns 1c bewirkte Veränderung der optischen Eigenschaften des Lichtwellenleiters 4 sind in voranstehend beschriebener Weise mittels der dort genannten Einrichtungen detektierbar. Zumindest ein Teil der Überlänge des optischen Messfühlers 4 im Gehäuse 5 wird durch die Veränderung der Position des Dorns 1c in den Bereich des Messsignalgebers beziehungsweise Aufnahmeraums 1f verlagert. Dies wird besonders durch einen Vergleich der Figuren 1 und 2 deutlich. In Figur 2 ist ein Teil des optischen Messfühlers 4, welcher zur rechten und linken Seite des Messsignalgebers vorgesehen ist, durch das Anheben des Messsignalgebers gestraffter im Vergleich zu Figur 1. Vorzugsweise ist die im Gehäuse 5 bereitgestellte Überlänge des optischen Messfühlers 4 so bemessen, dass im aktivierten Zustand, also bei einer Orientierung des Lichtwellenleiters 4 gemäß Figur 2 und 3, kein Zug oder keine Dehnung in seiner Längsrichtung auf dem Lichtwellenleiter 4 vorliegt. Die Festlegung der Überlänge des optischen Messfühlers 4 gegenüber dem Gehäuse 5 kann beispielsweise durch ein Verkleben oder Verschweißen des Lichtwellenleiters oder einer Ummantelung des Lichtwellenleiters am Gehäuse erfolgen. Eine solche Festlegung ist in den Figuren 1 bis 4 mit dem Bezugszeichen 7 dargestellt und kann eine Klebe-, Schweiß- oder sonstige Verbindungsstelle sein.

Figur 3 zeigt die erfindungsgemäße (Muffen-)Alarmmeldevorrichtung in einem Zustand, welcher auf den Zustand gemäß Figur 2 folgt. Es wurde demnach beispielsweise eine Tür oder eine Öffnung geöffnet, wodurch ein auf den Messsignalgeber wirkender Widerstand oder ein Gewicht entfernt wurde und der Messsignalgeber durch den Federdruck der Feder 2 aus dem Gehäuse 5 herausgedrückt wurde (Figur 2). Durch anschließendes Schließen der Tür oder der Öffnung oder bloßes Eindrücken des Messsignalgebers mit der Hand oder einem Werkzeug wird ein Zustand erreicht, wie er in Figur 3 dargestellt ist. Der Messsignalgeber mit dem Kontaktschalter 1a und dem Dorn 1c befindet sich also wieder in der Ausgangsposition (1. Position), wie er in Figur 1 dargestellt ist. Im Unterschied zu Figur 1 ist jedoch der optische Messfühler 4 weiterhin in der Position angeordnet, in die er durch den Dorn 1c gemäß Figur 2 bewegt wurde. Diese Form, also der aktivierte Zustand des Lichtwellenleiters 4, kann vorzugsweise durch Abstützen an dem Glasfaser-Führungselement 6 und/oder die Führungspartie 3 aufrechterhalten werden. Wie insbesondere aus Figur 3 hervorgeht, weist die Führungspartie 3 einen Führungsbereich 1b auf, entlang welchem der aktivierte optische Messfühler 4 in seiner Ausrichtung unterstützt wird. Die Elemente der Führungspartie 3 begrenzen hierbei einen Aufnahmeraum 1f, innerhalb welchem der aktivierte optische Messfühler 4 vorliegen kann. In diesem Aufnahmeraum 1f kann der aktivierte optische Messfühler 4 unabhängig von der Position des Messsignalgebers (eingefahren oder herausgedrückt) aktiviert vorliegen.

Ein Zurückführen des Messsignalgebers in seine 1. Position hat demnach keinen Einfluss auf die Ausrichtung des aktivierten optischen Messfühlers 4. Der Messsignalgeber kann mit dem Freiraum 1d bereitgestellt sein. Soweit der optische Messfühler nicht über die Höhe des Freiraums 1d hinausragt, bleibt der optische Messfühler 4 im Zustand, wie er in Figur 3 dargestellt ist, durch eine weitere Bewegung des Messsignalgebers unbeeinflusst. Hierdurch kann eine Nachlaufregelung geschaffen sein, welche eine Bereitstellung eines Signals durch Aktivierung des optischen Messfühlers über eine Verschiebung des Messsignalgebers zurück in seine 1. Position erbringt. Der Freiraum 1d ist so bemessen, dass der optische Messfühler 4 ausreichend Raum für ein Aufrechterhalten der dorngeformten Form hat. Die Höhe des Freiraums in Hubrichtung des Messsignalgebers korreliert hierbei vorzugsweise mit der Hubhöhe und ist insbesondere mindestens so hoch wie die Hubhöhe des Messsignalgebers.

Vor und/oder hinter dem optischen Messfühler 4 kann ein Verbindungselement zwischen dem Kontaktschalter 1a und dem Dorn 1c bereitgestellt sein, wodurch Dorn 1c und Kontaktschalter 1a miteinander wirkverbunden oder sogar einstückig gebildet sein können. Ist der Dorn gegenüber dem restlichen Messsignalgeber als Stufe oder Vorsprung ausgebildet, können das Verbindungselement und der Kontaktschalter in etwa gleich breit dimensioniert sein.

Die Nachlaufregelung, also das Aufrechterhalten eines messbaren Signals durch Verformung des Lichtwellenleiters 4, kann durch entsprechende Zustellung des mindestens einen Exzenters 1b zu dem optischen Messfühler 4 aufgehoben werden. Dieser Vorgang ist in Figur 4 dargestellt, wobei die Exzenter 1e durch eine Drehbewegung dem optischen Messfühler 4 so zugestellt sind, dass die Überlänge, welche in dem Freiraum 1d des Messsignalgebers gemäß Figur 3 vorgesehen war, aus diesem herausgezogen wird. Durch eine weitere Drehbewegung des mindestens einen Exzenters 1e wird der Zustand gemäß Figur 1 wieder erreicht.

Anstelle des Exzenters 1e kann auch ein Stempel dem optischen Messfühler 4 seitlich zu dem Messsignalgeber zugestellt werden. Grundsätzlich ist als Äquivalent für den Exzenter 1e jedes Mittel geeignet, welches, vorzugsweise mechanisch, den gebogenen Teil des optischen Messfühlers 4 gemäß Figur 3 aus dem Freiraum 1d herauszieht und in einen Bereich seitlich zu dem Messsignalgeber innerhalb des Gehäuses 5 überführt.

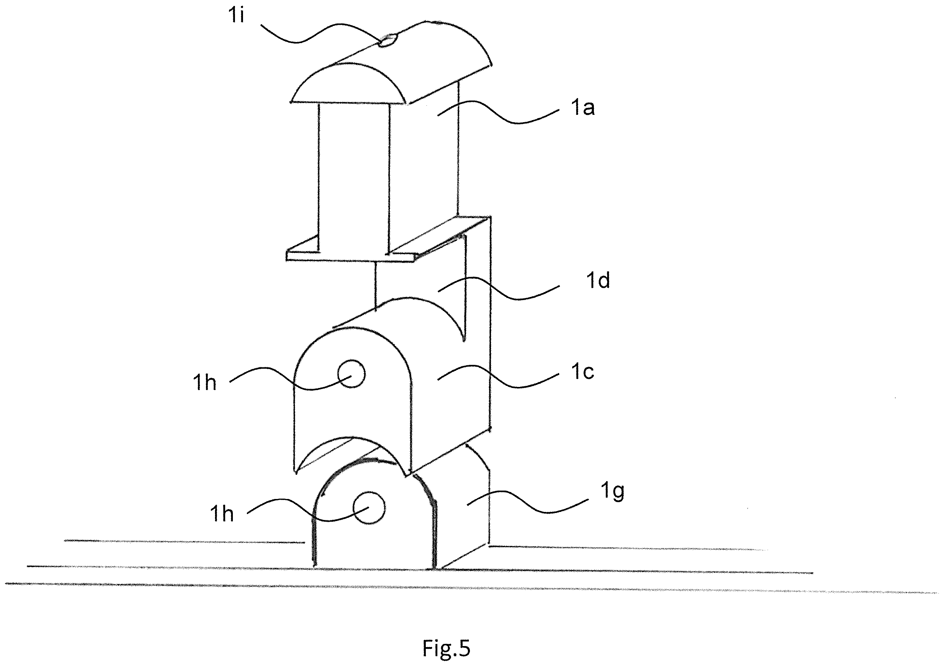

Figur 5 zeigt eine Ausführungsvariante des erfindungsgemäßen Messsignalgebers. Dieser ist mit einem Freiraum 1d gegenüber dem Kontaktschalter 1a und dem Dorn 1c gebildet, welcher zwischen den beiden Elementen vorgesehen ist. Grundsätzlich ist es denkbar, dass zumindest der Kontaktschalter einstückig mit dem Verbindungsbereich zwischen dem Dorn 1c und dem Kontaktschalter 1a formschlüssig gebildet ist und gegenüber dem Dorn 1c zurücktritt, wodurch der Freiraum 1d oberhalb des Dorns 1c nach oben hin nicht durch den Kontaktschalter 1a beschränkt ist. In einem solchen Fall wäre der Messsignalgeber als Stufe ausgebildet, bei welcher der Dorn 1c gegenüber dem restlichen Messsignalgeber seitlich hervortritt.

Der Freiraum 1d ist im Ausführungsbeispiel gemäß Figur 5 so ausgebildet, dass seine Höhe zumindest der Hubhöhe des Messsignalgebers entspricht, wodurch ein in den Freiraum 1d eingelegter optischer Messfühler 4 zwar durch den Dorn 1c bei einer Aufwärts-Hubbewegung umgelegt beziehungsweise umgebogen wird, bei einer Abwärts-Senkbewegung des Messsignalgebers jedoch von dem sich dem optischen Messfühler 4 von oben nähernden Kontaktschalter 1a in seiner Form nicht weiter beeinflusst beziehungsweise zurückgebogen wird.

An dem Kontaktschalter 1a kann nach allen Ausführungsformen und Figuren der vorliegenden Erfindung eine Öffnung 1i vorgesehen sein, welche eine Schraub-, Rast- oder Steckverbindung aufweist. Mit der Öffnung 1i kann ein Kontaktelement, wie beispielsweise ein Kontaktstift oder ein Bowdenzug oder ein Kugel-Druck-Signalüberträger, wirkverbunden beziehungsweise in die Öffnung 1i eingeführt sein, wobei das Kontaktelement vorgesehen ist, einen Abstand zwischen dem Kontaktschalter 1a und einem Verschluss für eine Öffnung, beispielsweise eine Tür, zu überbrücken, wodurch die Alarmvorrichtung, insbesondere der Kontaktschalter 1a, auch mit einem Abstand zu dem Verschluss beziehungsweise der Tür vorgesehen sein kann.

Durch das Kontaktieren des Kontaktelements mit dem Verschluss oder der Tür kann der Messsignalgeber in seiner ersten Position zurückgehalten sein.

Optional kann unterhalb des Dorns 1c ein Sicherungselement 1g für den Messsignalgeber vorgesehen sein, welches eine Öffnung 1h aufweist. das Sicherungselement 1g kann in einem unteren Bereich des Gehäuses vorgesehen sein und unterhalb des Messsignalgebers angeordnet sein. Das Sicherungselement 1g ist in den übrigen Figuren nicht dargestellt.

Der Messsignalgeber kann ebenfalls mit einer Öffnung 1h ausgebildet sein, welche vorzugsweise in der ersten Position des Messsignalgebers in etwa koaxial zu der Öffnung 1h des Sicherungselements 1g ausgerichtet ist. Das Sicherungselement 1g kann auf einer Innenseite des Gehäuses 5 angeordnet sein. Für eine koaxiale Ausrichtung der Öffnungen 1h kann der Messsignalgeber an seinem unteren Ende mit einem Hohlraum zur Aufnahme des Sicherungselements 1g ausgebildet sein.

Durch Einführen eines Stifts oder eines anderen Sicherungselements in die zueinander in etwa koaxial ausgerichteten Öffnungen 1h des Messsignalgebers und des Sicherungselements 1g kann der Messsignalgeber, beispielsweise für Transportzwecke, in seiner ersten Position gesichert werden. Hierdurch verbleibt der Messsignalgeber in seiner ersten Position unabhängig davon, ob auf das Kontaktelement 1a ein Druck ausgeübt wird oder nicht. Insbesondere das Sicherungselement 1g, die Öffnungen 1h und die weitere Öffnung 1i an dem Kontaktschalter 1a sind bevorzugte Ausführungsformen, welche mit den übrigen Merkmalen des Messsignalgebers, insbesondere wie in Figur 5 dargestellt, nicht in einem inneren Zusammenhang stehen.

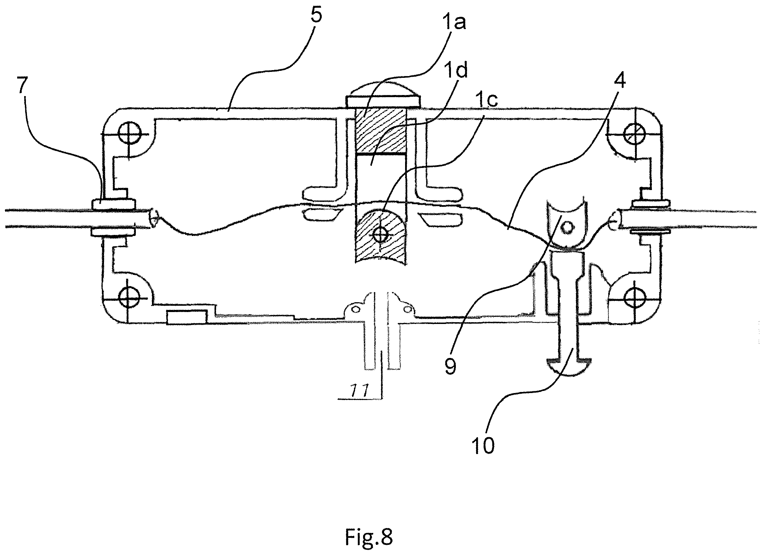

Alternativ oder ergänzend zu dem Sicherungselement 1g kann unterhalb des Messsignalgebers, insbesondere unterhalb des Dorns 1c, eine Öffnung 11 für einen Signalüberträger 20. beispielsweise einen Kugel-Druck-Signalüberträger, vorgesehen sein, wie in Fig. 8 dargestellt.

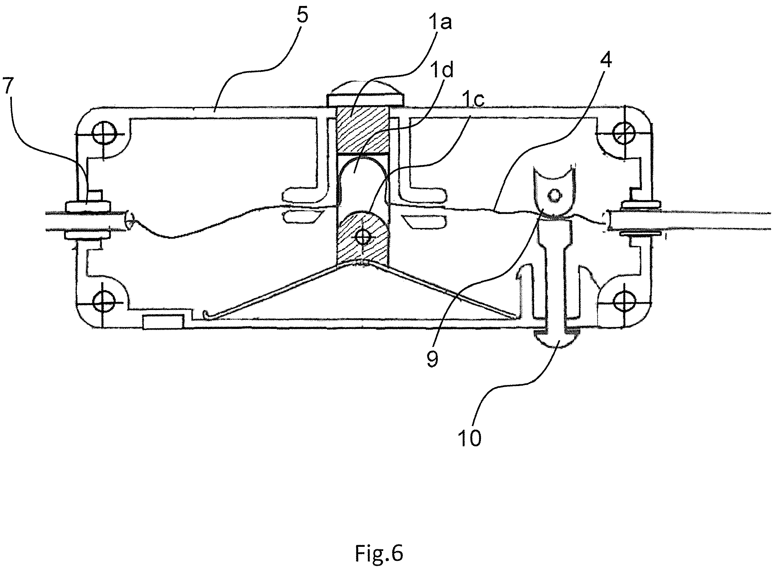

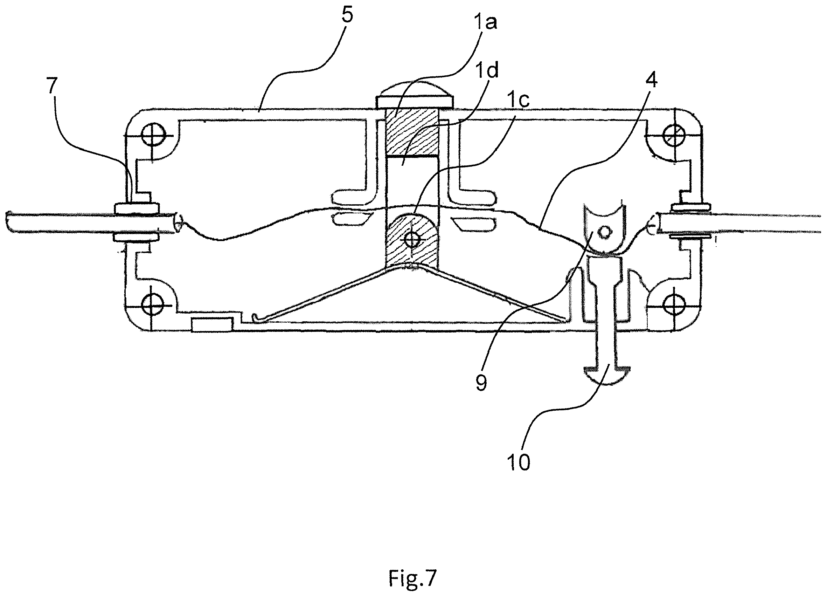

Figur 6 zeigt eine alternative Ausführungsform der erfindungsgemäßen Alarmmeldevorrichtung. Bei dieser ist anstelle des mindestens einen Exzenters ein Stempel 10 vorgesehen, welcher in Kontakt mit dem Messfühler 4 steht. Der Messfühler 4 kann zwischen dem Stempel 10 und einem Gegenstück 9 festgelegt sein, welches gemäß Figur 6 als Dorn ausgebildet ist. Das Gegenstück 9 und der Stempel 10 halten den Messfühler 4 zwischen den beiden Einrichtungen fest, wodurch eine Positionsveränderung des Stempels 10 ebenfalls zu einer Verlagerung des Messfühlers 4 im Gehäuse 5 führt. Insbesondere durch ein Heraustreten des Stempels 10 aus dem Gehäuse 5 und einer damit verbundenen Verlagerung des Messfühlers 4 wird der umgebogene/aktivierte Teil des Messfühlers 4 aus der Aufnahme 1d herausgezogen. Vorzugsweise sind der Stempel 10 und/oder das Gegenstück 9 federgelagert, wodurch eine Rückstellung in eine Ursprungsposition ermöglicht ist. Diese Ursprungsposition kann wahlweise eine zurückgezogene Position des Stempels 10 im Gehäuse (siehe Fig. 6) sein oder eine Position, in welcher sich der Stempel 10 in einer aus dem Gehäuse herausgetretenen Position befindet (siehe Fig. 7). Fig. 7 zeigt die Ausführungsvariante nach Fig. 6 mit aus dem Gehäuse herausgetretenem/herausragendem Stempel 10. Der Hubweg des Stempels 10 kann definiert und insbesondere auf den Hubweg des Messfühlers 4 abgestimmt sein, so dass die Biegung des Messfühlers 4 in der Aufnahme 1d durch Verlagerung des Stempels 10 zumindest soweit entfernbar ist, dass eine Detektionsgrenze für die Biegung des Messfühlers 4 unterschritten ist. Zu beiden Seiten ist der Messfühler 4 gegenüber dem Stempel 10 vorzugsweise mit einer Überlänge bereitgestellt, so dass bei einer Verlagerung des Stempels 10 ein Zug oder eine Dehnung des Messfühlers 4 vermieden ist.

Figur 8 zeigt eine Ausführungsvariante des Alarmsensors mit einer Aufnahme 11 für Signalüberträger, insbesondere Kugel-Druck-Signalüberträger oder Bowdenzug. Diese Aufnahme (11) ist unterhalb des Messsignalgebers 1 angeordnet und ausgebildet, einen Stift oder einen Vorsprung des Signalüberträgers aufzunehmen. Die Aufnahme 11 kann mit einer Schraub-, Rast- oder Steckverbindung 1i ausgebildet sein. Durch Kontaktieren und Drücken des Stifts auf den Messsignalgeber 1 kann dieser aus seiner ersten Position heraus verlagert werden, wodurch eine Aktivierung des Messfühlers 4 bewirkbar ist. Grundsätzlich kann die Aufnahme 11 auch oberhalb des Messsignalgebers 1 angeordnet sein.

Ist eine Aufnahme 11 für einen Signalüberträger beziehungsweise ein Signalüberträger im Bereich der Aufnahme 11 vorgesehen, kann der Messsignalgeber 1 im Vergleich zur Ausführungsform nach den Figuren 1 und 2 umgekehrt federgelagert sein. Demnach kann der Messsignalgeber 1 federgespannt in dem Gehäuse zurückgehalten werden und durch eine entsprechende Druckverschiebung von unterhalb des Messsignalgebers durch den Stift oder den Vorsprung des Signalüberträgers in eine zweite aus dem Gehäuse 5 ausgelagerte Position verschiebbar sein. Durch ein Entfernen oder Zurückziehen des Stiftes oder des Vorsprungs aus der Aufnahme 11 beziehungsweise aus dem Gehäuse 5 heraus kann durch die Federspannung der Messsignalgebers 1 zurück in das Gehäuse 5 verlagerbar sein, wobei die Aktivierung des umgebogenen Messfühlers 4 in dem Freiraum/Aufnahmeraum aufrechterhalten bleibt.

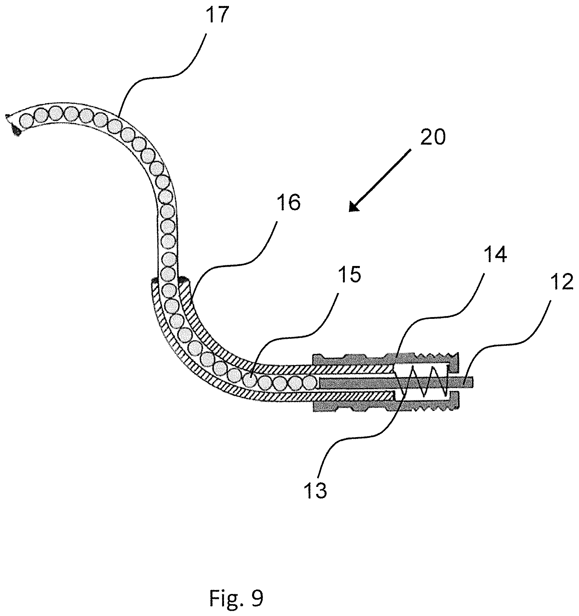

Durch Verlagerung des in Figur 8 dargestellten Stempels 10 aus dem Gehäuse 5 heraus kann die Aktivierung des Messfühlers 4 aufgehoben werden. Alternativ oder ergänzend zu dem Stempel 10 kann auch ein Exzenter 1e, wie mit Bezug zu dem Ausführungsbeispiel nach den Figuren 1 und 2 dargestellt ist, vorgesehen sein. Besonders bevorzugt weist das Gehäuse des Ausführungsbeispiels nach Figur 8 im Bereich der Aufnahme 11 ein Fixierungsmittel auf, mittels welchem ein Signalüberträger 20, wie er beispielsweise in Figur 9 dargestellt ist, fixierbar ist. Somit kann die Aktivierung des Lichtwellenleiters durch Verschiebung des Messsignalgebers durch Zustellung eines Stifts oder Vorsprungs über die Aufnahme 11, also von unten, und/oder über den oberen Bereich 1a des Messsignalgebers, durch direkte Kontaktierung oder

Figur 9 zeigt eine Ausführungsform eines Bowdenzug- oder Kugel-Druck-Signalüberträgers 20, wie er an der Aufnahme 11 oder 1i gemäß Figur 1 bis 8 angeordnet werden kann. In einem vorderen Bereich des Signalüberträgers 20 ist ein bereits voranstehend beschriebener Stift oder Vorsprung 12 angeordnet, welcher mittels der Feder 13 gegenüber dem Gehäuse 14, in welchem der Stift 12 aufgenommen ist, federlagerbar ist. Gemäß Figur 9 ist der Stift 12 in einer zurückgezogenen Position in dem Gehäuse 14 gelagert, wobei die Feder 13 in einer (relativ) entspannten Position vorliegen kann.

Durch Verlagerung von Kugeln 15, welche in einem Schlauchsegment 16 und einem angeschlossenen weiteren Schlauchsegment 17 vorgesehen sind, ist der Stift 12 aus dem Gehäuse 14 heraus verlagerbar, wodurch die Feder 13 gespannt werden kann. Durch Verlagerung des Stifts 12 aus dem Gehäuse 14 kann der Stift 12, soweit die Vorrichtung 20 an einer erfindungsgemäßen Alarmmeldevorrichtung angeschlossen ist, eine Verlagerung des Messsignalgebers 1 aus einer ersten Position heraus bewirken, wodurch eine Aktivierung des Messfühlers 4 bewirkbar ist. Dabei drücken die Kugeln direkt oder indirekt auf den Stift 12.

Grundsätzlich funktioniert der Signalüberträger 20 sowohl mittels Zug als auch mittels Druck. Die vorangehend beschriebene Variante beruht auf einer Ausführungsform, bei welcher eine Aktivierung der Alarmmeldevorrichtung durch den Aufbau eines Drucks in dem Signalüberträger 20 bewirkt wird, indem durch Übertragung des Drucks über die Kugeln 15,der Stift 12 aus dem Gehäuse 14 herausgedrückt wird. Im Fall eines Bowdenzugs kann es sich statt der Kugeln um ein Stahldraht oder Stahlseil handeln.

Die Verlagerung des Messsignalgebers 1 kann sowohl durch eine Verlagerung des Stifts 12 in das Gehäuse 5 sowie aus dem Gehäuse 5 heraus bewirkbar sein. Für eine geeignete Kombination von Signalüberträger 20 und Messsignalgeber kann die Anordnung der Feder 13 und der Federlagerung des Messsignalgebers so aufeinander abgestimmt sein, dass eine Verlagerung des Messsignalgebers auch dann bewirkbar ist, wenn der Stift 12 aus dem Gehäuse 5 entfernt wird. Dies kann beispielsweise dadurch bewirkt werden, dass die Aufnahme 11 oberhalb des Messsignalgebers 1 angeordnet ist, wodurch der aus dem Gehäuse 14 herausragende Stift 12 des Signalüberträgers 20 auf den oberen Bereich 1a des Messsignalgebers 1 eine Ruhelast ausübt. In der ersten Position würde demnach der Messsignalgeber 1 unter Federspannung stehen, wobei der Messsignalgeber 1 aus dem Gehäuse 5 heraustritt, sobald die Last des Stifts 12 von dem Messsignalgeber 1 entfernt wird. Dies kann beispielsweise dadurch geschehen, dass der Druck auf die Kugeln 15 (bzw. Strahldraht oder Stahlseil) in dem Schlauch 16, 17 abnimmt, wodurch eine Entspannung der Feder 13 in dem Gehäuse 14 ermöglicht ist, und/oder das Zurückziehen des Stifts 12 in das Gehäuse 14 bewirkbar ist. Durch entsprechende Anordnung des Signalüberträgers 20 relativ zu dem Messsignalgeber 1 kann somit sowohl eine Aktivierung des Messfühlers 4 durch eine Zugkraft auf den Signalüberträger 20 ("von oben") als auch (und/oder) eine Druckkraft ("von unten" wie in Fig. 8 + 9 dargestellt) auf den Signalüberträger 20 bewirkt werden.

Eine Druckkraft auf den Signalüberträger 20 kann beispielsweise mittels eines Quellelements bewirkt werden, welches mit flüssigen Medien in Kontakt tritt und dabei aufquillt, eines mit dem Signalüberträger in Kontakt stehenden dehnungsfähigen Elements, welches bei einer Temperänderung volumenveränderlich ist oder einem quellfähigen und/oder dehnungsfähigen Pulver, wodurch die Kugeln 15 (bzw. Stahldraht oder Stahlseil) auf die Feder 13 im Gehäuse 14 beziehungsweise den Stift 12 drückt. Eine Zugkraft auf den Signalüberträger 20 kann beispielsweise dadurch bewirkt werden, dass der Signalüberträger 20 mit einer Tür, einem Deckel oder einer verschlossenen Öffnung verbunden ist, wobei die Zugkraft auf den Signalüberträger durch das Öffnen der Tür oder der verschlossenen Öffnung bewirkbar ist.

Die Alarmmeldevorrichtung kann, insbesondere über den Signalüberträger 20, über eine Verteilereinrichtung beispielsweise in Form einer Mehrfach-Druck-/Zugsignalübertragung mit einer Vielzahl von verschlossenen Öffnungen, Türen oder Luken verbunden sein, wobei das Öffnen einer jeden einzelnen dieser Einrichtungen zu einer Aktivierung der Alarmmeldevorrichtung führen kann.

Der Signalüberträger kann auch als Seil oder Schnur, insbesondere als Bowdenzug, vorzugsweise mit Stahldraht oder Stahlseil als Zugmittel, ausgebildet sein, wobei dieser vorzugsweise mit dem Messsignalgeber 1 verbunden ist. Soweit der Messsignalgeber 1 federgelagert in einer zurückgezogenen Position in dem Gehäuse 5 vorgesehen ist und die Feder des Messsignalgebers 1 im nicht aktivierten Zustand der Alarmmeldevorrichtung in einem entspannten Zustand ist, kann durch ein Herausziehen des Messsignalgebers 1 mittels der Schnur oder des Seiles eine Aktivierung beziehungsweise Verlagerung des Messsignalgebers 1 aus dem Gehäuse heraus bewirkbar sein.

In jedem Fall kann die Annahme der Vorrichtung nach Aktivierung unabhängig von der Position des Messsignalgebers 1 in einem aktivierten Zustand verbleiben, bis die Aktivierung durch die voranstehend beschriebenen Einrichtungen, insbesondere durch Verlagerung eines Exzenters 1e oder Stempels 10, beendet wird.

Dem Fachmann ist klar, dass die Anordnung der Aktivierungseinrichtungen, wie beispielsweise einer Tür, des Signalüberträgers 20 oder eines Seil, welche mit dem Messsignalgeber 1 verbunden sind, nur dann Sinn macht, wenn die Federlagerung des Messsignalgebers auf diese Einrichtungen abgestimmt ist. Somit ist der Messsignalgeber in Abhängigkeit von der vorgesehenen Einrichtung in seiner ersten Position entweder federgespannt oder wird durch das Herausziehen in seiner zweiten/weiteren Position federgespannt, je nachdem ob der Messsignalgeber direkt in Kontakt mit einer Tür in Verbindung steht, mit einem Seil verbunden ist oder eine gemäß Figur 9 beschriebene Signalüberträgereinrichtung 20 aufweist die oberhalb oder unterhalb des Messsignalgebers 1 angeordnet ist.

### Bezugszeichenliste

- 1: Messsignalgeber
- 1a: Kontaktschalter
- 1b: Führungsbereich
- 1c: Dorn
- 1d: Freiraum
- 1e: Exzenter
- 1f: Aufnahmeraum
- 1g: Sicherungselement oder Verschraubung von Ober- und Unterteil des Gehäuses
- 1h: Öffnung an Sicherungselement und Messsignalgeber
- 1i: Aufnahme für Kontaktelement, beispielsweise Bowdenzug oder KugelDruck-Signalüberträger
- 2: Feder
- 3: Führungspartie
- 4: optischer Messfühler/Multimoden- oder Einmodenfaserabschnitt zwischen Muffen-Lecksensor und/oder Medienmeldesystem und Überwachungsfaser gespleißt
- 5: Gehäuse, vorzugsweise zweiteilig
- 6: Glasfaser-Führungselemente
- 7: Fixierung für optischen Messfühler/Lichtwellenleiter zur Sicherung der Überlänge im Gehäuse
- 8: Innenraum
- 9: Gegenstück
- 10: Stempel
- 11: Öffnung für Signalüberträger 20
- 12: Stift
- 13: Feder
- 14: Gehäuse
- 15: Kugeln
- 16, 17: Schlauch
- 20: Signalüberträger

## Patentansprüche

1. Stromlose, faseroptische Alarmmeldevorrichtung mit Nachlaufregelung der Alarmmeldung mit
einem in einem Gehäuse (5) angeordneten Messsignalgeber (1), mit zumindest einem Kontaktschalter (1a) und einem Dorn (1c) zum Biegen eines einbringbaren faseroptischen Messfühlers (4), zwischen welchen ein den faseroptischen Messfühler (4) aufnehmender Freiraum (1d) bereitgestellt ist, wobei der Messsignalgeber zwischen einer ersten Position und mindestens einer zweiten Position verstellbar ist,
und
einem Federelement (2) zur Positionierung des Messsignalgebers (1), wobei in dem Gehäuse (5) eine Führungspartie (3) mit einem Führungsbereich (1b) ausgebildet ist, in dem der aufnehmbare, faseroptische Messfühler in einen aktivierten Zustand biegbar ist,
dadurch gekennzeichne,
dass innerhalb des Führungsbereichs (1b) ein Aufnahmeraum (1f) für den faseroptischen Messfühler (4) ausgebildet ist, in welchem der aufgenommene aktivierte faseroptische Messfühler (4) unabhängig von der Position des Messsignalgebers (1), aktiviert aufnehmbar ist und dass der Freiraum (1d) bereitgestellt ist, den faseroptischen Messfühler (4) in der ersten Position des Messsignalgebers (1) unverändert aktiviert aufzunehmen.

2. Alarmmeldevorrichtung nach Anspruch 1,
**dadurch gekennzeichnet,**
**dass** der Messsignalgeber (1) in dem Aufnahmeraum (1f) vorgesehen ist.

3. Alarmmeldevorrichtung nach einem der Ansprüche 1 oder 2,
**dadurch gekennzeichnet,**
**dass** der Messsignalgeber (1) einen Freiraum (1d) aufweist, welcher sich ausgehend vom Dorn (1c) in Richtung kontaktschalterseitiges Ende (1a) des Messsignalgebers (1) erstreckt.

4. Alarmmeldevorrichtung nach einem der Ansprüche 1 bis 3,
**dadurch gekennzeichnet,**
**dass** das Gehäuse (5) entlang des eingelegten faseroptischen Messfühlers (4) teilbar ist.

5. Alarmmeldevorrichtung nach einem der Ansprüche 1 bis 4,
**dadurch gekennzeichnet,**
**dass** der faseroptische Messfühler (4) innerhalb des Gehäuses (5) mit einer Überlänge bereitgestellt ist und vorzugsweise gegenüber dem Gehäuse (5) festgelegt ist.

6. Alarmmeldevorrichtung nach einem der Ansprüche 1 bis 5,
**dadurch gekennzeichnet,**
**dass** entlang des faseroptischen Messfühlers (4) in dem Gehäuse (5) mindestens ein exzentrisch gelagertes Element (1e) und/oder ein Stempel (10) angeordnet ist, welches/welcher dem vorzugsweise aktivierten faseroptischen Messfühler (4) zustellbar ist und mittels welchem zumindest ein Teil der Überlänge des faseroptischen Messfühlers in dem Gehäuse aus dem Aufnahmeraum (1f) heraus, insbesondere in einen seitlich zum Messsignalgeber (1) vorgesehenen Innenraum der Alarmmeldevorrichtung, verlagerbar ist.

7. Alarmmeldevorrichtung nach einem der Ansprüche 1 bis 6,
**dadurch gekennzeichnet,**
**dass** der Kontaktschalter (1a) mit einem länglichen Kontaktelement oder einem Signalüberträger (20), insbesondere einem Bowdenzug oder einem Kugel-Druck-Signalüberträger, lösbar verbunden ist, welches ausgebildet ist, einen Abstand zwischen dem Kontaktschalter (1a) und einer Tür oder einem sonstigen Verschluss für eine Öffnung zu überbrücken.

8. Alarmmeldevorrichtung nach einem der Ansprüche 1 bis 7,
**dadurch gekennzeichnet,**
**dass** das längliche Kontaktelement oder der Signalüberträger (20) mit dem Messsignalgeber über eine Öffnung (1i) als Aufnahme verbunden ist.

9. Alarmmeldevorrichtung nach einem der Ansprüche 1 bis 8,
**dadurch gekennzeichnet,**
**dass** ein Sicherungselement (1g) vorgesehen ist, welches in den Messsignalgeber (1) in seiner ersten Position eingreift, wobei das Sicherungselement ausgebildet ist, den Messsignalgeber in seiner ersten Position festzulegen.

10. Alarmmeldevorrichtung nach Anspruch 6,
**dadurch gekennzeichnet,**
**dass** der Exzenter (1e) oder der Stempel (10) in dem Innenraum vorgesehen ist.

11. Alarmmeldevorrichtung nach Anspruch 6 oder 10,
**dadurch gekennzeichnet,**
**dass** der Stempel (10) federgelagert ist, wobei der Stempel (10) beim Hineindrücken oder beim Herausziehen des Stempels (10) in das beziehungsweise aus dem Gehäuse (5) unter Federspannung steht.

12. Alarmmeldevorrichtung nach Anspruch 6 oder 9,
**dadurch gekennzeichnet,**
**dass** dem Stempel (10) ein Gegenstück (9) zugeordnet ist, wobei der Messfühler (4) bereichsweise zwischen Stempel (10) und Gegenstück (9) fixierbar ist.

13. Alarmmeldevorrichtung nach einem der Ansprüche 1 bis 12
**dadurch gekennzeichnet,**
**dass** unterhalb oder oberhalb des Messsignalgebers (1) ein Signalüberträger (20) vorgesehen ist, welcher ausgebildet ist auf den Messsignalgeber (1) verlagernd einzuwirken.

## Claims

1. A current-free fibre optical alarm signalling device with follow up control of the alarm notification, having
a measurement signal generator (1), located in a housing (5), the measurement signal generator having at least one contact switch (1a) and a mandrel (1c) for bending a fibre optical measurement sensor (4) that can be inserted, between which elements an open space (1d) is furnished that receives the fibre optical measurement sensor (4), wherein the measurement signal generator can be adjusted between a first position and at least one second position, and
a spring element (2) for positioning the measurement signal generator (1),
wherein
in the housing (5), a guide portion (3) having a guide region (1b) is embodied, in which region the accommodatable fibre optical measurement sensor can be bent into an activated state,
**characterized in that**
inside the guide region (1b), a receiving chamber (1f) for the fibre optical measurement sensor (4) is embodied, in which chamber the received activated fibre optical measurement sensor (4) can be received in activated fashion, regardless of the position of the measurement signal generator (1); and
that the open space (1d) is furnished for receiving the fibre optical measurement sensor (4) in the first position of the measurement signal generator (1) in an unchanged, still-activated fashion.

2. The alarm signalling device of claim 1,
**characterized in that**
the measurement signal generator (1) is provided in the receiving chamber (1f).

3. The alarm signalling device of one of claims 1 or 2,
**characterized in that**
the measurement signal generator (1) has an open space (1d), which extends, beginning at the mandrel (1c), in the direction of the end (1a), toward the contact switch, of the measurement signal generator (1).

4. The alarm signalling device of one of claims 1 through 3,
**characterized in that**
the housing (5) is divisible along the inserted fibre optical measurement sensor (4).

5. The alarm signalling device of one of claims 1 through 4,
**characterized in that**
the fibre optical measurement sensor (4) inside the housing (5) is furnished with an excess length and is preferably fixed relative to the housing (5).

6. The alarm signalling device of one of claims 1 through 5,
**characterized in that**
along the fibre optical measurement sensor (4) in the housing (5), at least one eccentrically located element (1e) and/or a stamp (10) is located, which element or stamp can be supplied to the preferably activated fibre optical measurement sensor (4), and by means of which at least a portion of the excess length of the fibre optical measurement sensor in the housing can be shifted out of the receiving chamber (1f), in particular into an inner chamber, located laterally of the measurement signal generator (1), of the alarm signalling device.

7. The alarm signalling device of one of claims 1 through 6,
**characterized in that**
the contact switch (1a) is detachably connected to an elongated contact element or a signal transmitter (20), in particular a Bowden cable or a ball-pressure signal transmitter, which is embodied for spanning a spacing between the contact switch (1a) and a door or other closure, in order to enable opening.

8. The alarm signalling device of one of claims 1 through 7,
**characterized in that**
the elongated contact element or the signal transmitter (20) is connected to the measurement signal generator via an opening (1i) serving as a receptacle.

9. The alarm signalling device of one of claims 1 through 8,
**characterized in that**
a securing element (1g) is provided, which engages the measurement signal generator (1) in the first position thereof, and the securing element is embodied for fixing the measurement signal generator in its first position.

10. The alarm signalling device of claim 6,
**characterized in that**
the eccentric element (1e) of the stamp (10) is provided in the interior.

11. The alarm signalling device of claim 6 or 10,
**characterized in that**
the stamp (10), when the stamp (10) is being pressed inward or on being pulled out (10) into or out of the housing (5,) is subject to spring tension.

12. The alarm signalling device of claim 6 or 9,
**characterized in that**
a counterpart (9) is associated with the stamp (10), and the measurement sensor (4) can be fixed regionally between the stamp (10) and the counterpart (9).

13. The alarm signalling device of one of claims 1 through 12,
**characterized in that**
beneath or above the measurement signal generator (1), a signal transmitter (20) is provided, which is embodied for acting on the measurement signal generator (1) in such a way as to shift said signal generator.

## Revendications

1. Dispositif de message d'alarme de dépôt chimique à fibre optique avec un régime de fonctionnement retardé du message d'alarme muni d'un générateur de signaux de mesuration (1) disposé dans un habitacle (5) avec au minimum un interrupteur à contact (1a) et une épine (1c) pour le pliage d'un capteur introduit à fibre optique (4) où un espace libre (1d) réceptionnant le capteur à fibre optique (4) est mis à disposition où le générateur de signaux de mesuration (1) est ajustable entre une première position et au minimum une deuxième position et un élément élastique (2) pour le positionnement du générateur de signaux de mesuration (1) où une partie de guidage (3) dans l'habitacle (5) est formée avec une plage de guidage (1b) où le capteur introduit à fibre optique est pliable dans un état activé caractérisé de sorte qu'un réceptacle (1f) est formé à l'intérieur de la plage de guidage (1b) pour le capteur (4) où le capteur (4) introduit et activé à fibre optique (4) est introductible de manière active indépendamment de la position du générateur de signaux de mesuration (1) et que l'espace libre (1d) est mis à disposition introduisant le capteur à fibre optique (4) dans la première position du générateur de signaux de mesuration (1) à titre inchangé et actif.

2. Dispositif de message d'alarme selon la revendication 1 est caractérisé de sorte que le générateur de signaux de mesuration (1) est prévu dans le réceptacle (1f).

3. Dispositif de message d'alarme selon la revendication 1 ou 2 est caractérisé de sorte que le générateur de signaux de mesuration (1) présente un espace libre s'étendent à partir de l'épine (1c) dans la direction de la fin de l'interrupteur du contact (1a) du générateur de signaux de mesuration (1).

4. Dispositif de message d'alarme selon la revendication 1 jusqu'à 3 est caractérisé de sorte que l'habitacle (5) est divisible au long du capteur (4) introduit à fibre optique.

5. Dispositif de message d'alarme selon la revendication 1 jusqu'à 4 est caractérisé de sorte que le capteur (4) à fibre optique est disposé à l'intérieur de l'habitacle (5) sur une surlongueur et est fixé à titre préférentiel en face de l'habitacle (5).

6. Dispositif de message d'alarme selon la revendication 1 jusqu'à 5 est caractérisé de sorte qu'au minimum un élément est monté à titre excentrique tout au long du capteur (4) à fibre optique dans l'habitacle (5) et/ou qu'un tampon (10) est disposé combiné au capteur (4) à fibre optique activé à titre préférentiel grâce auquel au minimum une partie de la surlongueur du capteur à fibre optique est déplaçable dans l'habitacle du réceptacle (1f), particulièrement dans un espace intérieur prévu latéralement au générateur des signaux de mesuration (1) du dispositif de message d'alarme.

7. Dispositif de message d'alarme selon la revendication 1 jusqu'à 6 est caractérisé de sorte que l'interrupteur de contact (1a) est relié de manière amovible à un élément de contact oblong ou à un transmetteur de signaux (20), particulièrement à un câble sous gaine ou à un transmetteur de signaux de pression à bille formé de sorte à pallier la distance entre l'interrupteur de contact (1a) et une porte ou autre fermeture pour une ouverture.

8. Dispositif de message d'alarme selon la revendication 1 jusqu'à 7 est caractérisé de sorte que l'élément de contact oblong ou le transmetteur de signaux (20) est relié au générateur de signaux de mesuration par le biais d'une fermeture (1i) à titre inclusif.

9. Dispositif de message d'alarme selon la revendication 1 jusqu'à 8 est caractérisé de sorte qu'un élément fusible (1g) est prévu s'immisçant dans le générateur de signaux de mesuration (1) dans sa première position où l'élément fusible est formé de sorte qu'il fixe le générateur de signaux de mesuration dans sa première position.

10. Dispositif de message d'alarme selon la revendication 6 est caractérisé de sorte que l'excentrique (1e) ou le tampon (10) est prévu dans l'espace intérieur.

11. Dispositif de message d'alarme selon la revendication 6 ou 10 est caractérisé de sorte que le tampon (10) est monté élastiquement où le tampon (10) est placé lors du pressage ou le retirement du tampon (10) de l'habitacle (5) sous la tension du ressort.

12. Dispositif de message d'alarme selon la revendication 6 ou 9 est caractérisé de sorte qu'une contrepartie (9) est attribuée au tampon (10) où le capteur (4) est fixé partiellement entre le tampon (10) et la contrepartie (9).

13. Dispositif de message d'alarme selon la revendication 1 jusqu'à 12 est caractérisé de sorte qu'un transmetteur de signaux (20) est prévu au-dessous ou au-dessus du générateur de signaux de mesuration (1) formé de sorte qu'il agisse de délocalisant sur le générateur de signaux de mesuration (1).
